# EUROPEAN PATENT APPLICATION

(11) **EP 3 937 114 A1**
(43) Date of publication of application: **12.01.2022**
(21) Application number: 20867049.7
(22) Date of filing: 28.07.2020
(51) Int. Cl.: G06Q 50/10, G06F 13/00

(54) **COORDINATED OUTFIT ASSISTANCE SERVER AND COORDINATED OUTFIT ASSISTANCE SYSTEM**

(30) Priority: 27.09.2019 JP 2019176326
(71) Applicant: Fast Retailing Co., Ltd., Yamaguchi 754-0894 (JP)
(72) Inventor: MATSUYAMA, Shinya, Yamaguchi-shi, Yamaguchi 754-0894 (JP); FUNAI, Yohei, Yamaguchi-shi, Yamaguchi 754-0894 (JP); MASUKO, Yosuke, Yamaguchi-shi, Yamaguchi 754-0894 (JP); MORI, Tetsuya, Yamaguchi-shi, Yamaguchi 754-0894 (JP); WATANABE, Yusaku, Yamaguchi-shi, Yamaguchi 754-0894 (JP)
(74) Representative: Mewburn Ellis LLP
(86) International application number: PCT/JP2020/028777
(87) International publication number: WO 2021/059723

(57) **Abstract**

Provided are a coordination assisting sever and a coordination assisting system which allow coordinates with a high level of user satisfaction to be produced and proposed by simple operation. The coordination assisting server transmits optimized product information associated with a posted coordinates image to a user terminal as coordination assisting information (step S11). The coordination assisting server transmits, as coordination assisting information, product information with a high similarity score other than the optimized product information associated with the current separate posted image and a past posted coordinates image associated with the same product information as the optimized product information which is associated with the current separate posted image (step S14).

## Description

### Cross Reference to Related Applications

The present application claims the benefit of Japanese Patent Application No. 2019-176326 filed on September 27, 2019, which is hereby incorporated by reference herein in its entirety.

### Technical Field

The present invention relates to a coordination assisting server and a coordination assisting system for assisting coordination of fashion items.

### Background Art

People may not be so sure about how to coordinate fashion items such as clothes, footwear, hats, and accessories if they are interested in fashion. In any case, it is not easy to choose the optimum combination from a large number of fashion items when coordinating these items, and people are likely to end up choosing the same familiar coordinates.

In view of the foregoing, various systems for assisting coordination have been proposed. For example, according to a fashion coordinating method disclosed in Patent Document 1, a user inputs a desired coordinates condition (such as an occasion, a period, and a brand), and a terminal device determines a combination of clothing and accessories and proposes the result to the user.

### Citation List

### Patent Document

Patent Document 1: Patent Publication JP-A-2002-339135

### Summary

However, according to the method disclosed in Patent Document 1, the user must go through the cumbersome operation of inputting a desired coordinates condition each time. Meanwhile, it may be difficult to produce and propose coordinates satisfactory to the user on the basis of simple input of the coordinates condition.

With the foregoing in view, it is an object of the present invention to provide a coordination assisting server and a coordination assisting system which allow coordinates with a high level of user satisfaction to be produced and proposed by simple operation.

### Solution to Problem

A coordination assisting server (200) according to one aspect of the present invention includes a product information database (DB2) which stores various pieces of product information and carries out a first step (S3) for obtaining a separate posted image (P2) by separating a posted coordinates image (P1) posted by a user into parts which can be compared with the various pieces of product information, a second step (S4) for obtaining category information about the separate posted image (P2), a third step (S5) for comparing the separate posted image (P2) and various product images included in the various pieces of product information, a fourth step (S6) for rearranging the various pieces of product information in descending order of similarity according to a result of comparison, a fifth step (S7) for excluding the product information including mismatched category information from the rearranged pieces of product information by comparing the category information about the separate posted image (P2) and category information included in the product information, a sixth step (S9) for obtaining the various pieces of product information remaining after the exclusion as optimized product information, a seventh step (S10) for associating the separate posted image and at least a part of the optimized product information, and an eighth step (S11) for presenting the associated optimized product information to the user as coordination assisting information.

A coordination assisting server (200) according to another aspect of the present invention includes a product information database (DB2) which stores various pieces of product information and carries out a first step (S3a) for obtaining a separate search image by analyzing a coordinates search image (P5) requested for search by a user, thereby separating the coordinates search image (P5) into parts which can be compared with the various pieces of product information, a second step (S4a) for obtaining category information about the separate search image, a third step (S5a) for comparing the separate search image and various product images included in the various pieces of product information, a fourth step (S6a) for rearranging the various pieces of product information in descending order of similarity according to a result of comparison, a fifth step (S7a) for excluding, from the rearranged pieces of product information, the product information including mismatched category information by comparing category information about the separate search image and category information included in the product information, a sixth step (S9a) for obtaining the various pieces of product information remaining after the exclusion as optimized product information, and a seventh step (S10a) for presenting the optimized product information to the user as coordination assisting information.

### Advantageous Effects of Invention

According to the invention, coordinates with a high level of user satisfaction can be produced and proposed by simple operation.

### Brief Description of Drawings

Fig. 1 is a view for illustrating a general configuration of a coordination assisting system.
Fig. 2 is a block diagram of a general configuration of a user terminal.
Fig. 3 is a block diagram of a general configuration of a coordination assisting server.
Fig. 4 is a flowchart for illustrating coordination assisting processing according to a posted image.
Fig. 5 is an exemplary view of a posted coordinates image.
Fig. 6 is a view including two parts separated from the posted coordinates image.
Fig. 7 is an exemplary view of a separate posted image and optimized product information associated therewith.
Fig. 8 is an exemplary view of similar product information and posted reference coordinates images.
Fig. 9 is a flowchart for illustrating coordination assisting processing based on image search.
Fig. 10 is an exemplary view of a coordinates search image.
Fig. 11 is an exemplary view of coordinates search images and similar optimized product information.
Fig. 12 is an exemplary view of posted reference coordinates images.

### Description of Embodiments

Hereinafter, an embodiment of the present invention will be described in conjunction with the accompanying drawings. Note however that the following embodiment is only an example, and the same does not preclude various variations and application of techniques which are not explicitly described below. In other words, the present invention can be carried out with various variations without departing from the gist and scope of the invention.

### A. Embodiment

### [Summary of Coordination Assisting System]

A coordination assisting system according to the embodiment can propose new coordinates totally unexpected to the user on the basis of ways of wearing fashion items (in other words coordinates) by the user.

Note that clothing such as T-shirts and jeans is assumed as examples of fashion items in the following, but the system can be applied to any item which can be coordinated such as footwear, hats, bags, and accessories.

### (1) Configuration

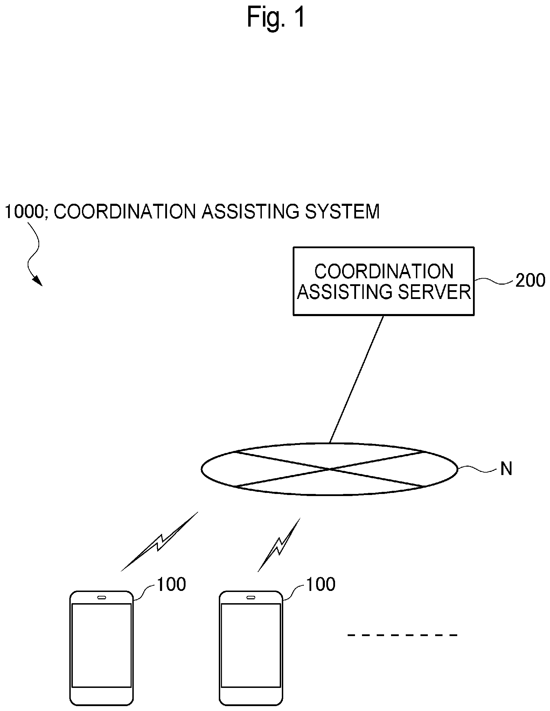

Fig. 1 is a view of a general configuration of a coordination assisting system 1000.

The coordination assisting system 1000 includes a user terminal 100 owned by each user and a coordination assisting server 200 which provides coordination assisting information representing new coordinates in response to a request from each of the user terminals 100.

Each of the user terminals 100 and the coordination assisting server 200 can communicate with each other over a communication network N. The communication network N may be the Internet, LAN, a leased line, a telephone line, a corporate network, a mobile communication network, Bluetooth (registered trademark), WiFi (Wireless Fidelity), or any other communication line, or a combination thereof, and may be wired or wireless.

### [User Terminal 100]

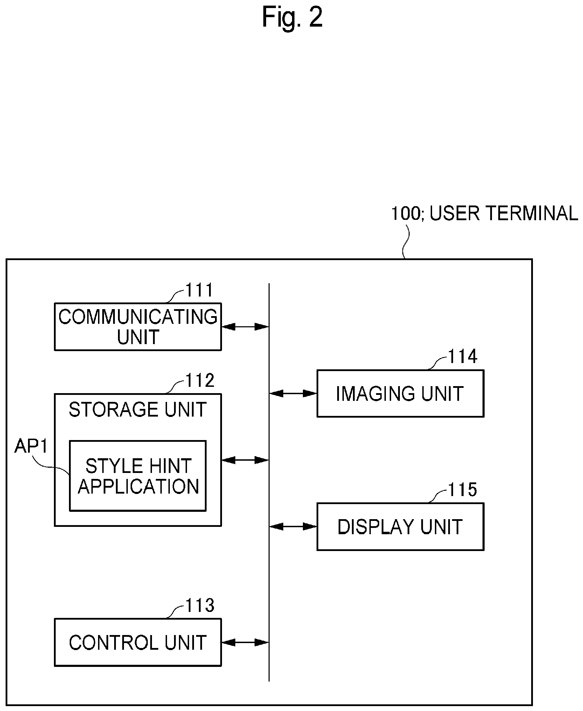

Fig. 2 is a block diagram of a general configuration of the user terminal 100.

The user terminal 100 is for example a smart phone and includes a communicating unit 111, a storage unit 112, a control unit 113, an imaging unit 114, and a display unit 115.

The communicating unit 111 includes for example a communicating interface which complies with various communication standards and exchanges various kinds of information with another device (such as a coordination assisting server 200).

The storage unit 112 includes a memory and stores various kinds of data and software. An application AP1 for receiving coordination assisting information (hereinafter referred to as "style hint application") provided by the coordination assisting server 200 is installed in the storage unit 112.

The control unit 113 includes a CPU and centrally controls various elements of the user terminal 100 by executing various control programs stored in the storage unit 112.

The image in unit 114 includes a camera and an image processing circuit and stores various images captured by the user in the storage unit 112.

The display unit 115 includes a liquid crystal panel and can display various messages and images.

It is not intended to limit the user terminal 100 to the smart phone, and the embodiment is applicable to any terminal including the configuration shown in Fig. 2 such as a cell phone, a wearable terminal, a tablet terminal, and a personal computer.

### [Coordination Assisting Server 200]

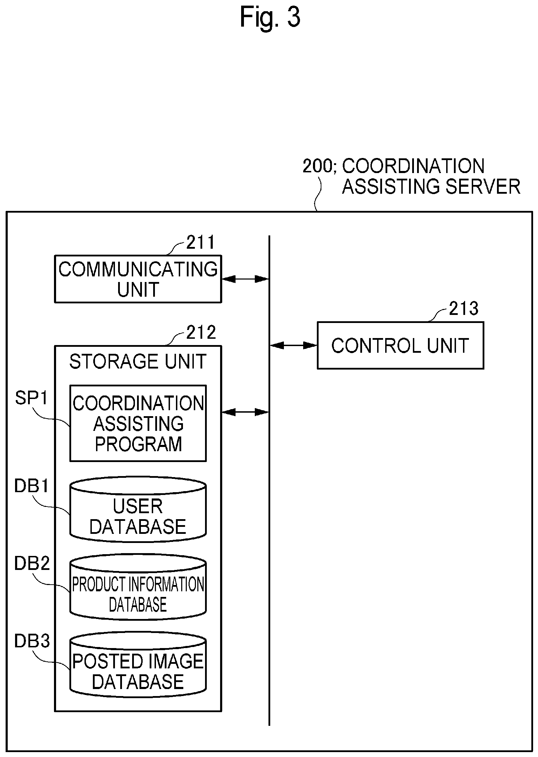

Fig. 3 is a block diagram of a general configuration of the coordination assisting server 200.

The coordination assisting server 200 may include an information processing device such as a personal computer. The coordination assisting server 200 includes a communicating unit 211, a storage unit 212, and a control unit 213. Here, the communicating unit 211, the storage unit 212, and the control unit 213 correspond to the communicating unit 111, the storage unit 112, and the control unit 113 of the user terminal 100, respectively and have the same hardware configurations. Therefore, characteristic features and functions about the coordination assisting server 200 will be hereinafter described.

The storage unit 212 includes a user database DB1, a product information database DB2, and a posted image database DB3.

The user database DB1 includes personal information (user information) about the users of the system 1000. The user information includes the user ID, gender, date of birth, name, address, and contact information to identify the user. The user information may include, but not limited to, information such as the user's icon image or information indicating the user's preferences which may be input by the user.

The product information database DB2 includes product information about fashion items (such as T shirts, jeans, browses, and skirts) handled by the operator on EC sites or at real stores. In addition to the product image, the product information includes the product name, size information indicating the size, target information indicating a target layer, price information indicating the price, inventory information indicating availability, brand information indicating the brand name, category information indicating the category of the product (for example short-sleeved shirt), and color information (for example white).

The posted image database DB3 includes coordinates images for fashion items posted by users (hereinafter referred to as "posted coordinates images"). Each of the users carries out obtaining/selecting operation for posted coordinates images using the style hint application AP1 installed in the user terminal 100.

The storage unit 212 stores a coordination assisting program SP1 for providing coordination assisting information to each of the users.

The control unit 213 activates the coordination assisting program SP1 stored in the storage unit 212 to carry out coordination assisting processing based on the coordination assisting processing and image search according to posted images as will be described.

### [Coordination Assisting Processing According to Posted Images]

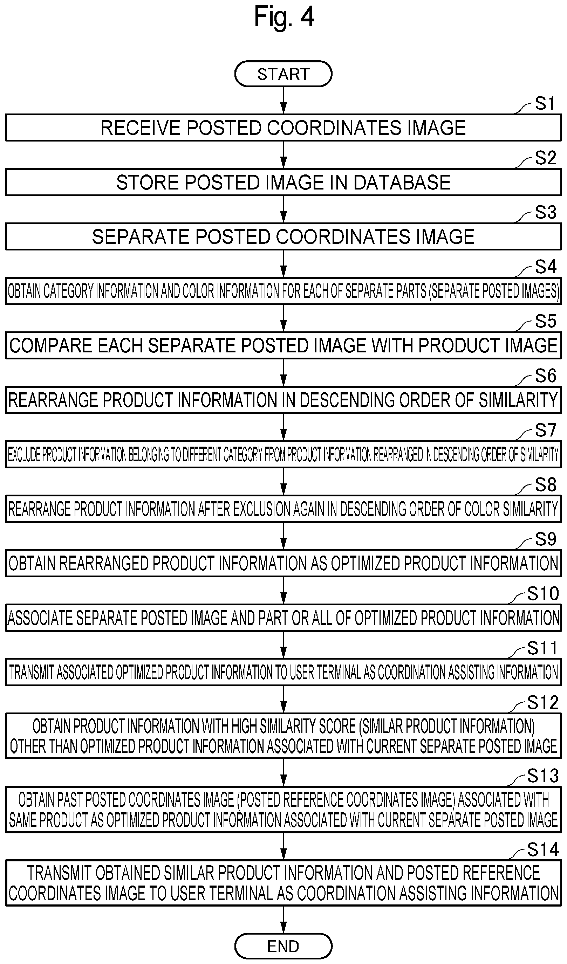

Fig. 4 is a flowchart for illustrating coordination assisting processing according to posted images.

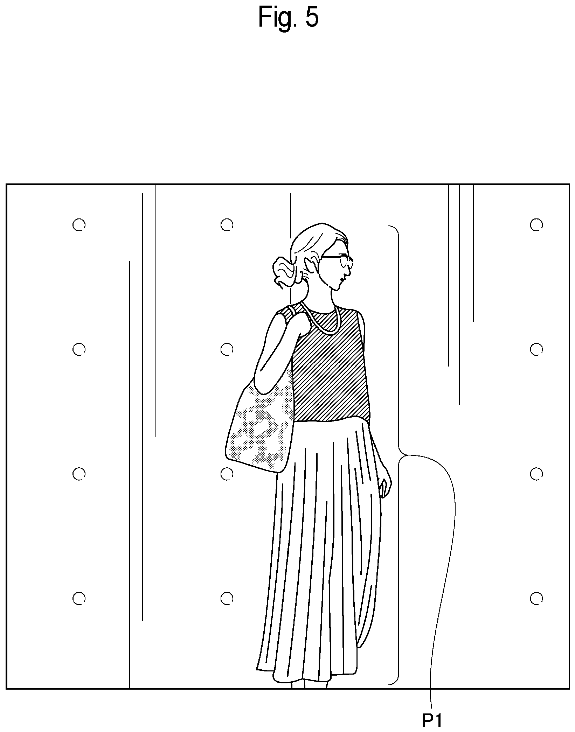

It is assumed that the user activates the style hint application AP1 by operating the user terminal 100 as appropriate and then obtains and selects a posted coordinates image P1 for the user for example as shown in Fig. 5 using the imaging unit 114. In response to the selection, the user terminal 100 transmits the posted coordinates image P1 to coordination assisting server 200.

Upon receiving the posted coordinates image P1 from the user terminal 100 (step S1), the coordination assisting server 200 stores the image in the posted image database DB3 (step S2).

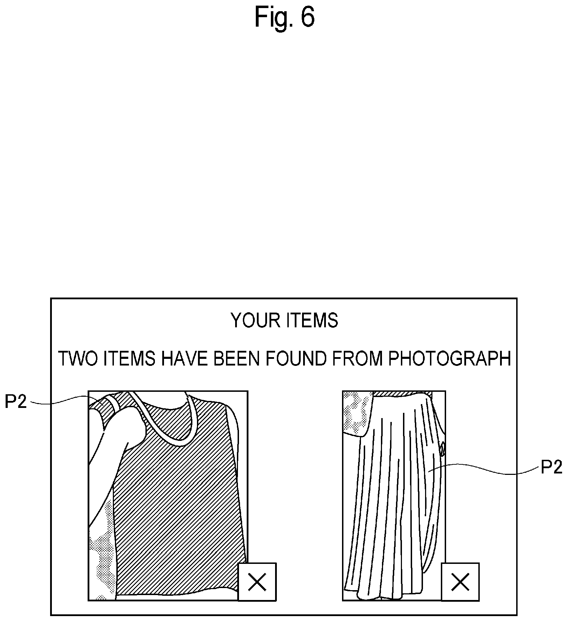

The coordination assisting server 200 divides the posted coordinates image P1 into parts which can be recognized as fashion items (i.e., parts which can be compared with the product information) by analyzing the image (for example by identifying coordinates and assigning frames) (step S3). Fig. 6 shows the user posted coordinates image separated into two parts P2, tops and bottoms. The coordination assisting server 200 can use an image analysis API (Application Programming Interface) provided by an external server when analyzing the posted coordinates image P1, but the application is not limited to this. The coordination assisting server 200 can use an image analysis application installed therein if any.

The coordination assisting server 200 obtains category information representing the category of a fashion item (for example, half sleeved shirt) and color information representing a color (for example, white) for each of the separate parts P2 (hereinafter referred to as "the separate posted image") (step S4). When a posted coordinates image cannot be separated (for example when no fashion item is included in the posted coordinates image), the coordination assisting server 200 ends the processing by skipping the following processing steps.

The coordination assisting server 200 compares each of the separate posted image P2 with each of product images stored in the product information database DB2 to obtain a similarity score (step S5). The similarity score may be obtained by cutting out the regions of objects from each of the images, extracting feature points about the regions of the cut out objects, and calculating feature quantities from the feature points to calculate a similarity score (so-called feature quantity matching) but the method is not limited to this. The similarity score may be calculated using an image analysis API provided by an external server.

The coordination assisting server 200 rearranges the pieces of product information in descending order of the similarity scores on the basis of the similarity scores obtained for the product images (step S6).

The coordination assisting server 200 then compares the category information about the separate posted image P2 obtained in step S4 and the category information included in each of the product information to exclude product information belonging to different categories from the product information rearranged in descending order of the similarity scores (step S7). For example, if product information with a high similarity score includes product information in a different category (e.g., slacks) from the category of the separate posted image (for example, short-sleeved shirt), then the product information is excluded.

The coordination assisting server 200 compares the color information about the separate posted image P2 obtained in step S4 with the color information included in each piece of product information and rearranges the product information remaining after the exclusion in descending order of color similarity (step S8). The color similarity score can be obtained, for example, by using color difference.

Then, the coordination assisting server 200 obtains each piece of the rearranged product information as optimized product information (step S9) and associates the separate posted image with some or all of the obtained optimized product information (step S10). The associated optimized product information is automatically selected on the basis of the similarity score (or selected by operation of the user terminal 100 by the user).

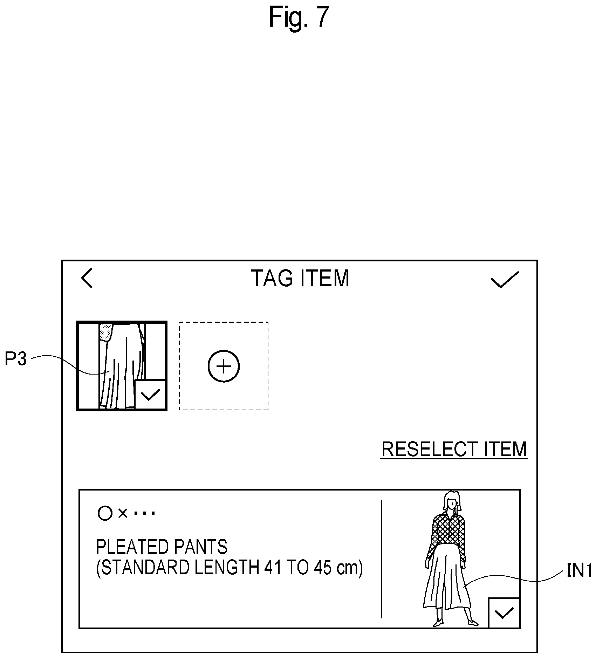

The coordination assisting server 200 transmits the associated optimized product information to the user terminal 100 as coordination assisting information (step S11). As a result, the display unit 115 of the user terminal 100 displays a separate posted image P3 and associated optimized product information IN1 as shown in Fig. 7.

The coordination assisting server 200 also obtains product information with a high similarity score (hereinafter referred to as "similar product information") other than the optimized product information IN1 associated with the current separate posted image P3 from the product information database DB2 (step S12).

The coordination assisting server 200 also obtains, from the posted image database DB3, a past posted coordinates image (hereinafter referred to as "posted reference coordinates image") associated with the same product information as the optimized product information IN1 which is associated with the current separate posted image P3 (step S13).

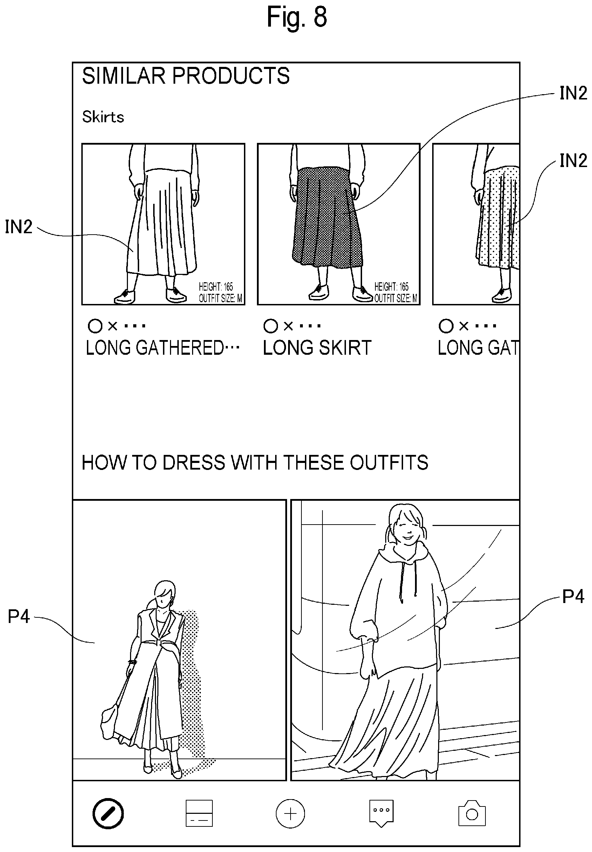

The coordination assisting server 200 transmits the obtained similar product information and the posted reference coordinates image to the user terminal 100 as coordination assisting information (step S14) and then ends the processing. As a result, similar product information IN2 and a posted reference coordinates image P4 are displayed on the display unit 115 of the user terminal 100 as shown in Fig. 8.

As in the foregoing, according to the method, posted coordinates images and optimized product information can be associated with each other by simple operation. More specifically, the user does not have to input various keywords (such as "T-shirt," "black," ..., and "for men") as in the conventional manner in order to associate a posted coordinates image and each piece of product information and can post a coordinates image in a simple manner.

The coordination assisting server 200 can provide the user who has posted a coordinates image with optimized product information associated with the posted coordinates image as well as similar product information IN2 and the posted reference coordinates image P4 shown in Fig. 8 as coordination assisting information. This allows the user to find new, highly satisfying coordinates which the user would not come up with from the coordinates the user has posted by the simple operation of posting a coordinates image.

### [Coordination Assisting Processing Based on Image Search]

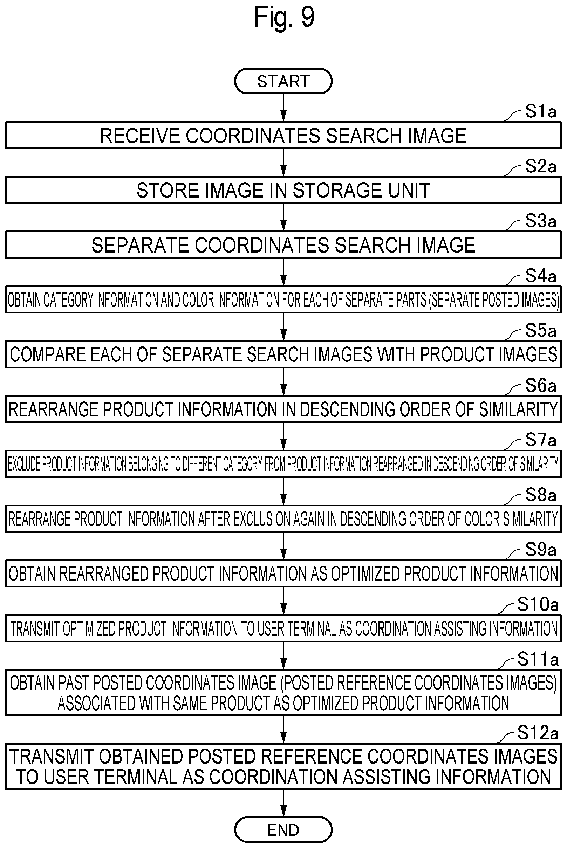

Fig. 9 is a flowchart for illustrating coordination assisting processing based on image search.

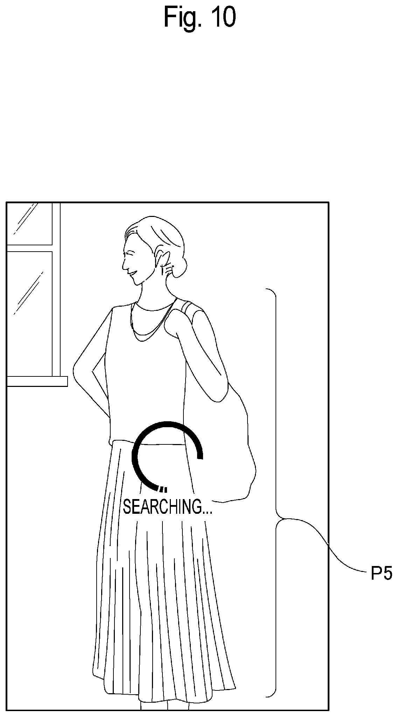

It is assumed that the user operates the user terminal 100 as appropriate to activate the style hint application AP1, and then uses the imaging unit 114 to obtain and select, for example, a coordinates image P5 as a search target (hereinafter referred to as the coordinates search image) as shown in Fig. 10. The coordination search images may include, but not limited to, images of people with nice coordinates seen on streets or at stores. When such a selection is made, the user terminal 100 transmits the coordination search image together with a search request to the coordination assisting server 200.

Upon receiving the coordinates search image P5 from the user terminal 100 (step S1a), the coordination assisting server 200 stores the image in the storage unit 212 (step S2a).

By analyzing the coordinates search image P5, the coordination assisting server 200 separates the image into parts which can be recognized as fashion items (i.e., parts which can be compared with product information) (step S3a). Since the description of steps S4a to S8a shown in Fig. 9 can be almost identical to the above description of steps S4 to S8 shown in Fig. 4 and therefore these steps will not be described in detail.

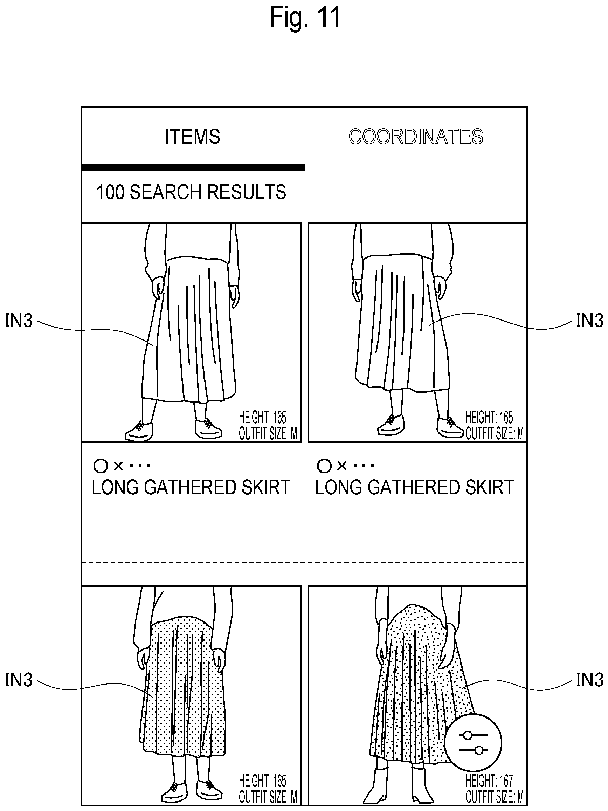

Upon obtaining optimized product information (step S9a), the coordination assisting server 200 transmits the information to the user terminal 100 as coordination assisting information (step S10a). As a result, the display unit 115 of the user terminal 100 displays optimized product information IN3, which is similar to the coordinates search image as shown in Fig. 11.

The coordination assisting server 200 further obtains, from the posted image database DB3, past posted coordinates images (i.e., posted reference coordinates images) associated with the same product information as the optimized product information (step S11a).

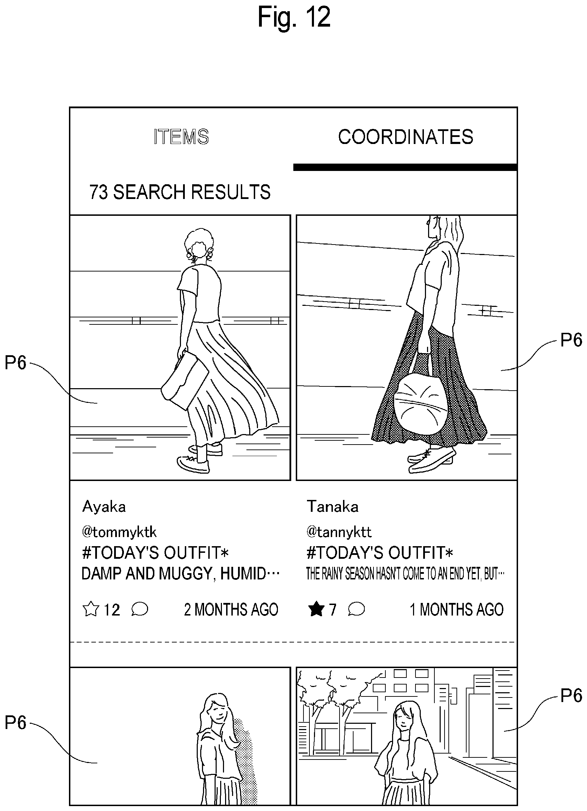

The coordination assisting server 200 transmits the obtained posted reference coordinates images to the user terminal 100 as coordination assisting information (step S12a) and ends the processing. As a result, a posted reference coordinates image P6 as shown in Fig. 12 is displayed at the display unit 115 of the user terminal 100.

As in the foregoing, according to the method, when a coordinates image as a search target is selected by the user, the coordination assisting server 200 provides the user with the optimized product information IN3 and the posted reference coordinates image P6 similar to the coordinates search image as coordination assisting information. This allows the user to find a new, highly satisfying coordinates which the user would never come up with by the simple operation of selecting a coordinates image as a search target.

### B. Other Features

Herein, the term "unit" not only refers to a physical configuration but also to implementation of the processing carried out by the "unit" by software. The processing performed by one "unit" or device may be realized by two or more physical configurations or devices or processing performed by two or more "units" or devices may be realized by single physical means or a device.

The steps in the processing described herein may be arbitrarily reordered or executed in parallel or even some of the steps may be omitted if no discrepancy about the processing contents is generated by doing so.

The coordination assisting program SP1 which carries out various kinds of processing described herein may be stored in a recording medium. The recording medium having the coordination assisting program SP1 stored therein may be a non-transitory recording medium. The non-transitory recording medium is not particularly limited but may be a recording medium such as a CD-ROM.

### Reference Signs List

- 1000: Coordination assisting system
- 100: User terminal
- 200: Coordination assisting server
- 211: Communicating unit
- 212: Storage unit
- 213: Control unit
- SP1: Coordination assisting program
- DB1: User database
- DB2: Product information database
- DB3: Posted image database

## Claims

1. A coordination assisting server (200) comprising a product information database (DB2) which stores various pieces of product information, the coordination assisting server which carries out:
a first step (S3) for obtaining a separate posted image (P2) by analyzing a posted coordinates image (P1) posted by a user and separating the posted coordinates image into parts which can be compared with the various pieces of product information;
a second step (S4) for obtaining category information about the separate posted image (P2);
a third step (S5) for comparing the separate posted image (P2) and various product images included in the various pieces of product information;
a fourth step (S6) for rearranging the various pieces of product information in descending order of similarity according to a result of comparison;
a fifth step (S7) for excluding the product information including mismatched category information from the rearranged pieces of product information by comparing the category information about the separate posted image (P2) and category information included in the product information;
a sixth step (S9) for obtaining the various pieces of product information remaining after the exclusion as optimized product information;
a seventh step (S10) for associating the separate posted image and at least a part of the optimized product information; and
an eighth step (S11) for presenting the associated optimized product information to the user as coordination assisting information.

2. The coordination assisting server according to claim 1, wherein the second step (S4) further comprises a step (S8) for obtaining color information about the separate posted image (P2) and rearranging again the various pieces of product information remaining after the exclusion in descending order of color similarity; and
the sixth step (S9) comprises obtaining the various pieces of product information rearranged again as optimized product information.

3. The coordination assisting server according to claim 1 or 2 which further comprises a step (S12) for obtaining, from the product information database (DB2), product information with the high similarity score other than the optimized product information associated with the separate posted image, and
a step (S14) for presenting the obtained product information with the high similarity score to the user as coordination assisting information.

4. The coordination assisting server according to claim 3 further comprising a posted image database (DB3) which stores the coordinates posted images, the coordination assisting server which comprises:
a step (S13) for obtaining, from past posted coordinates images stored in the posted image database (DB3), the past posted coordinates image associated with the same product information as the optimized product information which is associated with the separate posted image; and
a step (S14) for presenting the obtained past posted coordinates image to the user as coordination assisting information.

5. A coordination assisting server (200) comprising a product information database (DB2) which stores various pieces of product information, the coordination assisting server which carries out:
a first step (S3a) for obtaining a separate search image by analyzing a coordinates search image (P5) requested for search by a user, thereby separating the coordinates search image (P5) into parts which can be compared with the various pieces of product information;
a second step (S4a) for obtaining category information about the separate search image;
a third step (S5a) for comparing the separate search image and various product images included in the various pieces of product information;
a fourth step (S6a) for rearranging the various pieces of product information in descending order of similarity according to a result of comparison;
a fifth step (S7a) for excluding, from the rearranged pieces of product information, the product information including mismatched category information by comparing category information about the separate search image and category information included in the product information;
a sixth step (S9a) for obtaining the various pieces of product information remaining after the exclusion as optimized product information; and
a seventh step (S10a) for presenting the optimized product information to the user as coordination assisting information.

6. The coordination assisting server according to claim 5, further comprising a posted image database (DB3) which stores posted coordinates images, the coordination assisting server which further comprises:
a step (S11a) for obtaining, from past posted coordinates images stored in the posted image database, the past posted coordinates image associated with the same product information as the optimized product information; and
a step (S12a) for presenting the obtained past posted coordinates image to the user as coordination assisting information.

7. A coordination assisting system (1000) comprising a user terminal (100) and a coordination assisting server (200), wherein the user terminal (100) transmits a posted coordinates image to the coordination assisting server (200),
the coordination assisting server (200) comprising a product information database (DB2) which stores various pieces of product information, and
the coordination assisting server carries out:
a first step (S3) for obtaining a separate posted image (P2) by analyzing the posted coordinates image (P1) upon receiving the posted coordinates image (P1) (S1) and separating the posted coordinates image into parts which can be compared with the various pieces of product information;
a second step (S4) for obtaining category information about the separate posted image (P2);
a third step (S5) for comparing the separate posted image (P2) and various product images included in the various pieces of product information;
a fourth step (S6) for rearranging the various pieces of product information in descending order of similarity according to a result of comparison;
a fifth step (S7) for excluding, from the rearranged various pieces of product information, the product information including mismatched category information by comparing category information about the separate posted image (P2) and category information included in the product information;
a sixth step (S9) for obtaining the various pieces of product information remaining after the exclusion as optimized product information;
a seventh step (S10) for associating the separate posted image with at least part of the optimized product information; and
an eighth step (S11) for transmitting the associated optimized product information to the user terminal as coordination assisting information.

8. A coordination assisting system (1000) comprising a user terminal (100) and a coordination assisting server (200), wherein the user terminal (100) transmits a coordinates search image to the coordination assisting server (200),
the coordination assisting server (200) comprising a product information database (DB2) which stores various pieces of product information,
the coordination assisting server which carries out:
a first step (S3a) for obtaining a separate search image by analyzing the posted coordinates image (P1) upon receiving the coordinates search image (P5) (S1a) and separating the coordinates search image (P5) into parts which can be compared with the various pieces of product information;
a second step (S4a) for obtaining category information about the separate search image;
a third step (S5a) for comparing the separate search image and various product images included in the various pieces of product information;
a fourth step (S6a) for rearranging the various pieces of product information in descending order of similarity according to a result of comparison;
a fifth step (S7a) for excluding, from the rearranged various pieces of product information, the product information including mismatched category information by comparing the category information about the separate search image and category information included in the product information;
a sixth step (S9a) for obtaining the various pieces of product information remaining after the exclusion as optimized product information; and
a seventh step (S10a) for transmitting the optimized product information to the user terminal as coordination assisting information.
